# EUROPÄISCHE PATENTSCHRIFT

(11) **EP 3 486 019 B1**
(45) Veröffentlichungstag und Bekanntmachung des Hinweises auf die Patenterteilung: **03.11.2021**
(21) Anmeldenummer: 18206769.4
(22) Anmeldetag: 16.11.2018
(51) Int. Cl.: B23K 1/005, B23K 1/19, B23K 101/00, B23K 101/34

(54) **LASER-LÖTOPTIK ZUM FÜGEN BESCHICHTETER WERKSTÜCKE**
LASER SOLDERING LENS FOR JOINING COATED WORKPIECES
OPTIQUE DE SOUDAGE LASER PERMETTANT D'ASSEMBLER DES PIÈCES À USINER REVÊTUES

(30) Priorität: 16.11.2017 LU 100518
(43) Veröffentlichungstag der Anmeldung: 22.05.2019
(73) Patentinhaber: II-VI Delaware, Inc., Wilmington, Delaware 19801 (US)
(72) Erfinder: Müller, Alexander, 16356 Ahrensfelde (DE)
(74) Vertreter: Tegethoff, Sebastian

(56) Entgegenhaltungen:
- EP-A1- 0 577 589
- DE-A1-102006 038 422
- DE-A1-102015 207 279

## Beschreibung

### GEBIET DER ERFINDUNG

Die Erfindung betrifft eine Vorrichtung zum Fügen von Werkstücken mittels eines Laserstrahls und ein Verfahren zur Nutzung der Vorrichtung zur Verlötung von Blechen, gemäß dem Oberbegriff des Anspruchs 1 bzw. 8 (siehe zum Beispiel DE 10 2015 207279 A1).

### HINTERGRUND DER ERFINDUNG

Im Automobilbau ist es seit Jahrzenten üblich Bleche zum Schutz vor Korrosion zu beschichten. Am bekanntesten ist eine Beschichtung von Blech mit Zink, welches neben einer abschirmenden Wirkung auch einen aktiven Korrosionsschutz bietet, da es gegenüber dem in der Spannungsreihe edleren Eisen auch als Opferanode wirkt. Diese Wirkung einer Zinkbeschichtung verhindert die Korrosion des Eisens bis zu einem Abstand von ca. 5 mm. Daher sind auch Fehlstellen in der Zinkbeschichtung und bloßliegende Schnittkanten geschützt. Als Standardverzinkungsverfahren hat sich das elektrolytische Verzinken etabliert. In den letzten Jahren konnte jedoch das Feuerverzinkungsverfahren in der Form weiterentwickelt werden, dass präzise einstellbare Schichtdicken hergestellt werden können.

Feuerverzinkungssysteme, zu denen auch Zink-Magnesium Beschichtungen zählen, bieten einen verbesserten Schutz vor Korrosion. Zink-Magnesium Beschichtungen verbessern die Korrosionsbeständigkeit um das Zwei- bis Dreifache und werden daher seit einigen Jahren bevorzugt eingesetzt. Ein weiterer Vorteil der Zink-Magnesium Beschichtung ist ein verbesserter Korrosionswiderstand gegen Schnittkanten- und Schnittflächenkorrosion.

Zum Fügen von Werkstücken werden im Automobilbau zumeist Laserlötverfahren eingesetzt. Als Lot im Lötprozess wird vorzugsweise CuSi₃ eingesetzt. So offenbart die DE 197 50 586 A1 ein Lot bestehend aus 97 Gew.-% Kupfer und 3 Gew.-% Silizium.

In der DE 198 02 305 A1 wird Laserschweißkopf zum Fügen von vorzugsweise 3-dimensionalen metallischen Bauteilen, insbesondere aus Titan offenbart. Der Laserschweißkopf weist eine Schweißdüse und eine Vorrichtung zur Zuführung eines Schweißzusatzdrahtes auf, der über eine den Schweißdüsenkörper durchdringende Drahtzuführung zur Schweißstelle geführt wird. Alternativ kann die Drahtzuführung auch vor der Schweißstelle angeordnet sein, so dass der Draht in einem flachen Winkel zugeführt wird.

Die publizieret deutsche Patentanmeldung mit dem Aktenzeichen DE 10 2015 207279 A1 offenbart eine Fügevorrichtung und ein Fügeverfahren, wobei die Fügevorrichtung zum laserstrahlbasierten Zusammenfügen mindestens zweier Bauteile dient und eine erste Laserstrahlungsquelle, einen ersten Strahlungsleiter, der mit der ersten Laserstrahlungsquelle verbunden ist, um von dieser emittierte erste Laserstrahlung in den ersten Strahlungsleiter einzukoppeln, eine zweite Laserstrahlungsquelle, mindestens einen zweiten Strahlungsleiter, der mit der zweiten Laserstrahlungsquelle verbunden ist, um von dieser emittierte zweite Laserstrahlung in den zweiten Strahlungsleiter einzukoppeln, und Fokussiermittel aufweist, die an die ersten und zweiten Strahlungsleiter gekoppelt und eingerichtet sind, die ersten und zweiten Laserstrahlungen voneinander beabstandet in eine Fügezone der Bauteile zu fokussieren. Um den Installationsaufwand zu mindern, sind die Fokussiermittel eingerichtet, die ersten und zweiten Laserstrahlungen über einen gemeinsamen Strahlengang zu fokussieren, und ist eine Kopplungseinrichtung vorgesehen, die eingangsseitig mit den ersten und zweiten Strahlungsleitern und austrittsseitig mit den Fokussiermitteln verbunden und eingerichtet ist, die ersten und zweiten Laserstrahlungen in den gemeinsamen Strahlengang einzukoppeln. Die offenbarte Vorrichtung nutzt separate Laserstrahlquellen, koppelt die erzeigten Strahlen aber in einen einzigen Strahlengang ein, wodurch die Projektion des Strahls, sowie dessen mögliche Winkel zum Auftreffen auf das Werkstück deutlich eingeschränkt sind. Es wird bei dieser Anmeldung explizit hervorgehoben, dass die Verwendung eines gemeinsamen Strahlganges vorteilhaft ist.

Aus der DE 10 2006 038422 A1 ist Verfahren zum Verbinden mindestens zweier Werkstücke, insbesondere zweier Bleche bekannt, bei dem ein Laserstrahl in mindestens zwei Teilstrahlen aufgeteilt wird, dadurch gekennzeichnet, dass mindestens ein Teilstrahl zum Schmelzen eines Lotwerkstoffes dient, während der/die anderen Teilstrahl(en) zur Erwärmung der zu verbindenden Werkstücke dient(dienen). Dieses Dokument basiert auf der Verwendung einer einzigen Strahlquelle bzw. einer Aufspaltung des Laserstrahls aus der einen Laserstrahlquelle und offenbart keine Nebenfaser, welche aus einer separaten Laserstrahlquelle mit einem Laserstrahl gespeist wird.

Die publizierte europäische Patent Anmeldung mit dem Aktenzeichen EP 0 577 589 A1 beschreibt ein Verfahren sowie eine Vorrichtung zum Löten mit Hilfe eines Laserstrahls, wobei die von der Lötstelle abgestrahlte Wärmestrahlung gemessen, differenziert und auf eine Verringerung in der Steigung überwacht wird, wobei dieser verminderte Anstieg als Beginn des Benetzungsvorganges nach Aufschmelzen des Lots erkannt wird, und wobei nach einem vorwählbaren Zeitintervall Δt₂ die Wärmezufuhr durch den Laserstrahl, in Entsprechung zur vollständigen Benetzung bzw. Vereinigung der Lot-Flüssigkeiten, beendet wird. Dieses Dokument offenbart weder zwei Laserstahlquellen noch die Verwendung von separaten Fasern.

Diese aus dem Stand der Technik bekannten Laserschweißköpfe weisen den Nachteil auf, dass die miteinander zu fügenden Werkstücke an der Schweißstelle beschichtet sind. Die Beschichtung kann den Fügeprozess nachteilig beeinflussen, da die Beschichtung beispielsweise bei der Erhitzung andere Eigenschaften aufweist als das Material der Werkstücke, wodurch es zu Blasenbildung oder Einschlüssen von Beschichtung an der Nahtstelle kommen kann. Diese Effekte können sich nachteilig auf die Qualität des Fügeprozesses auswirken.

Dieses Problem stellt sich insbesondere unter Berücksichtigung der bereits erwähnten neuartigen Blechbeschichtungen, welche im Lötprozess nur unzureichend benetzet werden bzw. auf Grund ihres Reflektionsverhaltens ein anderes Aufheizverhalten durch Laserstrahlung aufweisen, dar.

Die vorliegende Erfindung soll das Problem lösen, einen leistungsskalierbaren, separaten Laserstrahl über eine separate Faser in den Vorlauf der Bearbeitung von Werkstücken bringen zu können, welches sich vorteilhaft auf die Verwendung von Blechbeschichtungen auswirkt, die sich schlechter mit Lot, beispielsweise CuSi₃ benetzen lassen.

### KURZE BESCHREIBUNG DER ERFINDUNG

Die vorlegende Erfindung stellt im Anspruch 1 eine Vorrichtung zum Fügen von Werkstücken mittels eines Laserstrahls zur Verfügung.

In einem weiteren Aspekt der Erfindung ist vorgesehen, dass das Ende der Nebenfaser an der Aufnahme zur Formung einer Strahllinie axial strukturiert sein kann, vor einer Mikrolinse angeordnet sein kann oder ein optisches Element aufgespleißt sein kann.

In einer weiteren Ausführungsform kann der Abstand zwischen dem Ende der Nebenfaser und der Mikrolinse zur Veränderung der Breite der optischen Struktur variabel sein. Der Begriff "optische Struktur" beschreibt hierbei die veränderliche Abbildungsgestalt des Laserstrahls. Diese Abbildungsgestalt kann linienförmig bis hin zu polygonalen Formen ausgebildet sein. Die vorliegende Stoßform definiert die Abbildungsgestalt.

Es ist weiterhin vorgesehen, dass ein Druckluft- oder Schutzgasstrom derart am Ende der Nebenfaser angeordnet sein kann, dass dieses vor Verschmutzungen geschützt ist.

In einer weiteren Ausführungsform ist vorgesehen, dass eine separate Nebenfaser oder eine Zweikernfaser mit Hauptfaser und Nebenfaser, wobei die Nebenfaser zumindest am Ende des Lichtaustritts aus der Zweikernfaser getrennt ist vorhanden ist.

In einem weiteren Aspekt der Erfindung kann bei Verwendung einer Zweikernfaser auf der Laserseite ein Doppelfaserstecker oder ein Hybridstecker angeordnet sein.

Die Auskopplung kann durch die Anordnung eines Lochspiegels oder eines verschiebbaren Umlenkspiegels zwischen einem ersten und zweiten Strahlumlenker der Laseroptik erreicht werden.

Die vorliegende Erfindung betrifft weiterhin im Anspruch 8 ein Verfahren zum Fügen von Werkstücken mittels eines Laserstrahls.

Die Auskopplung kann durch die Anordnung eines Lochspiegels oder eines verschiebbaren Umlenkspiegels, welche jeweils den zweiten Umlenkspiegel der Laseroptik ersetzen würden, erreicht werden. Der ausgekoppelte Laserstrahl wird erfindungsgemäß dann mittels einer kurzbrennweitigen Fokussierung in eine Nebenfaser eingekoppelt.

Der ausgekoppelte Laserstrahl zur Formung der Strahllinie/optischen Struktur kann auch mittels einer Nebenfaser einer Zweikernfaser übertragen werden, wobei die Nebenfaser am Ende des Lichtaustritts aus der Mehrkernfaser getrennt ist.

Es ist weiterhin vorgesehen, dass die vorlaufende Strahllinie oder optische Struktur mittels einer axialen Strukturierung der Nebenfaser, einer Mikrolinse oder eines optischen Elements, welches auf das Ende der Nebenfaser aufgespleißt ist, geformt wird.

Die Aufnahme für die Nebenfaser kann an der Drahtzuführeinrichtung des Lots angebracht sein, wobei die Aufnahme radial geklemmt sein kann.

Für das Verfahren ist weiterhin vorgesehen, dass die Breite der Strahllinie oder optischen Struktur angepasst werden kann.

Im Rahmen des erfindungsgemäßen Verfahrens kann die Aufnahme durch die Drahtzuführungseinrichtung des Lots gegenüber dem Fügeprozess abgeschirmt sein.

Weiterhin kann zum Schutz der Nebenfaser vor Verschmutzungen aus dem Fügeprozess ein Druckluft- oder Schutzgasstrom verwendet werden.

Die Erfindung betrifft des Weiteren die Verwendung einer Vorrichtung zum Fügen von Werkstücken mittels eines Laserstrahls nach einem der Ansprüche 1 bis 7 zur Erzeugung einer dem Fügeprozess vorgelagerten Strahllinie/optischen Struktur zum Verdampfen einer Beschichtung zu fügender Werkstücken.

### KURZE BESCHREIBUNG DER FIGUREN

Die Erfindung wird im Folgenden anhand von Figuren näher dargestellt. Dabei ist für den Fachmann offensichtlich, dass es sich nur um eine mögliche Ausführungsform handelt, ohne dass die Erfindung auf die gezeigten Ausführungsformen beschränkt ist. Es zeigt:
- Figur 1: Schematische Darstellung eines Laserschweißkopfes
- Figur 2: Partielle Strahlauskopplung mittels eines Lochspiegels
- Figur 3: Partielle Strahlauskopplung mittels eines verschiebbaren Umlenkspiegels, A, B, C: Ausführungsformen der Spitze der Nebenfaser
- Figur 4: Partielle, skalierbare Strahlauskopplung mittels verschiebbarem Auskoppelspiegel
- Figur 5: Darstellung einer Nebenfaser, die aus der Hauptfaser geführt wird
- Figur 6: Darstellung mit zwei separaten Laserstrahlquellen
- Figur 7: Darstellung einer Nebenfaser, die an einer Drahtführung angeordnet ist

### AUSFÜHRLICHE BESCHREIBUNG DER ERFINDUNG

Die vorliegende Erfindung stellt eine Verbesserung beim Fügen von Werkstücken mit neuartigen Beschichtungen zur Verfügung. Dies wird durch die Verwendung einer separaten Faser, welche im Rahmen der vorliegenden Offenbarung auch als Nebenfaser bezeichnet wird, und einer separaten, zweiten Laserstrahlquelle für die Nebenfaser erreicht. Die Strahlauskopplung aus dem Laserstrahl der Hauptfaser stellt eine zweite Laserstrahlquelle dar.

Eine separate zweite Laserstrahlquelle bietet den Vorteil, dass dadurch ein in seiner Leistung skalierbarer Laserstrahl der Nebenfaser vorliegt, welcher an die jeweilige Anforderung im Vorlauf des Fügeprozesses angepasst werden kann. Diese Anforderungen hängen von der Beschichtung der Werkstücke und auch den Materialen ab, welche verbunden werden sollen.

Der Strahl der Nebenfaser wird zu einer Strahllinie geformt und verdampft Beschichtungen oder erwärmt diese kurz vor der Löt- oder Fügestelle. Dadurch wird ein negativer Einfluss der Beschichtung auf den Fügeprozess, beispielsweise durch unterschiedliche Eigenschaften der Beschichtung beim Erhitzen, vermieden.

Im Rahmen der vorliegenden Erfindung sind die Begriffe Hauptfaser und Hauptlichtleitkabel sowie Nebenfaser und Nebenlichtleitkabel jeweils synonym zu verstehen.

Neben den zuvor beschriebenen Vorteilen der Verwendung einer Nebenfaser, macht sich die vorliegende Erfindung eine der Lötstelle vorgelagerten Drahtzuführung zunutze. An dieser wird das Ende der Nebenfaser befestigt, aus dem der Laserstrahl austritt bzw. Strahlformungselemente, welche sich an diesem Ende der Nebenfaser befinden. Dadurch wird eine konstruktiv einfach zu erreichende Lösung geschaffen.

In Ergänzung zu dem vorteilhaft geringen konstruktiven Aufwand durch Nutzung der Drahtzuführung als Halterung für die Nebenfaser, erfüllt die Drahtzuführung auch noch einen weiteren Zweck. Diese schirmt das Ende der Nebenfaser bzw. daran befestigte Strahlformungselemente vom Fügeprozess ab, sodass schon allein durch eine Anordnung des Endes der Nebenfaser bzw. von Strahlformungselementen hinter - im Sinne einer dem Fügeprozess abgewandten Seite - der Drahtzuführung, ein Schutz vor Verschmutzungen erreicht wird.

Ergänzend zu der vorteilhaften Anordnung hinter der Drahtzuführung reichen dann einfache weitere Maßnahmen aus, um den Schutz des Endes der Nebenfaser bzw. von Strahlformungselemente zu verbessern. Dazu kommen ein Druckluft- oder Schutzgasstrom in Betracht, welche gegebenenfalls sowieso an der Drahtzuführung angeordnet sein können.

Zur Umsetzung der erfindungsgemäßen Lösung des eingangs geschilderten Problems ist eine eigene Laserstrahlquelle im Sinne der oben gegebenen Definition für die Nebenfaser erforderlich. So kann der Laserstrahl an die jeweils vorhandene Beschichtung angepasst werden und ist unabhängig vom Laserstrahl bzw. der Laserstrahlquelle, welche für den eigentlichen Fügeprozess verwendet wird. Dies unabhängig davon, ob es sich um einen mittels einer separaten Laserstrahlquelle erzeugten Laserstrahl handelt oder um eine partielle Laserstrahlauskopplung aus dem Laserstrahl de Hauptfaser.

Die vorliegende Erfindung sieht eine partielle Strahlauskopplung aus einem kollimierten Strahl eines Laserbearbeitungskopfes vor. So kann beispielsweise zwischen einem ersten und zweiten Strahlumlenker die partielle Strahlauskopplung erfolgen. Dazu kann ein Lochspiegel verwendet werden oder ein verschiebbarer Umlenkspiegel. Ein Lochspiegel ist nicht relativ zum Hauptspot leistungsvariierbar, wohingegen ein verschiebbarer Umlenkspiegel dies ist.

Die vorliegende Erfindung sieht neben der Verwendung einer separaten Nebenaser auch die Verwendung einer Zweikernfaser mit getrennter Haupt- und Nebenfaser vor. Dem einschlägigen Fachmann ist bekannt, dass auch bei mehrkernigen Fasern ein optischer Kern aus der mehrkernigen Faser getrennt bzw. herausgeführt werden kann, so dass dieser dann getrennte Teil der vormals gemeinsamen, mehrkernigen Faser auch separat geführt und mittels Aufnahmen befestigt werden kann.

Mit Hilfe einer kurzbrennweitigen Fokussierung kann der ausgekoppelte Strahl in eine steckbare Nebenfaser eingekoppelt werden, deren anderes Ende bzw. Strahlformungselemente dann, wie zuvor beschreiben, an der Drahtzuführung befestigt ist/sind.

Die vorliegende Erfindung modifiziert letztlich die Oberfläche einer Lötstoßfuge beispielsweise, indem durch ein gezieltes Aufheizen bis hin zu einer geringfügigen Beschichtungsverdampfung die Oberfläche der Lötstoßfuge besser benetzbar gestaltet wird.

Weiterhin vorteilhaft an der erfindungsgemäß vorgeschlagenen Lösung der eingangs formulierten technischen Aufgabe ist, dass bestehende Laserschweißköpfe mit der Erfindung in einem überschaubaren konstruktiven und finanziellen Aufwand nachgerüstet werden können.

Mit der erfindungsgemäßen Lösung kann punktgenau das Intensitätsprofil des Strahls der Nebenfaser an die Erfordernisse einer Fügestelle, wie beispielsweise eines Bördelstoßes, angepasst werden.

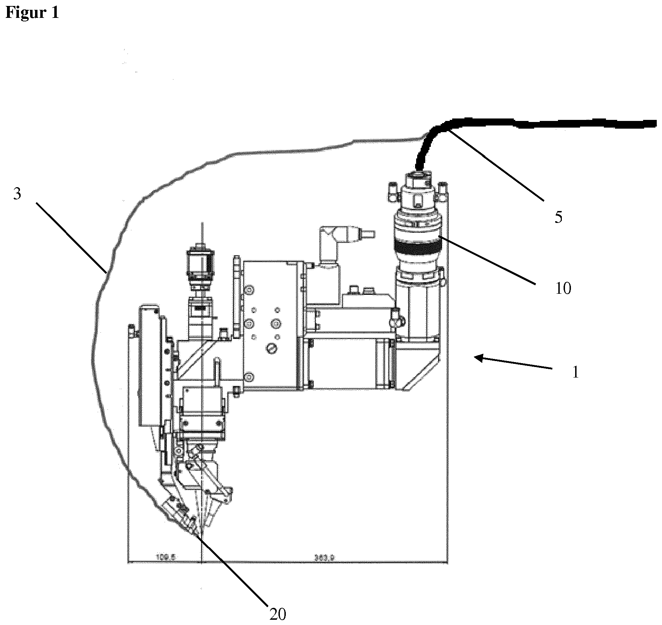

Figur 1 zeigt eine Laserschweißkopf 1 mit einem Standardkabel 5, welches an die Laseroptik 10 angeschlossen ist. Aus dem Standardkabel 5, welches ein Mehrfaserkabel ist, zweigt die Nebenfaser 15 als so genannter "Pigtail" ab.

Die Nebenfaser 15 ist an der Drahtzuführung 20 des Laserschweißkopfes befestigt. Aus Figur 1 ergibt sich die Abschirmung des Endes der Nebenfaser bzw. von an deren Ende befestigten Strahlformungselementen von der Stelle des Fügeprozesses, da die Befestigung auf der davon abgewandten Seite der Drahtzuführung 20 liegt.

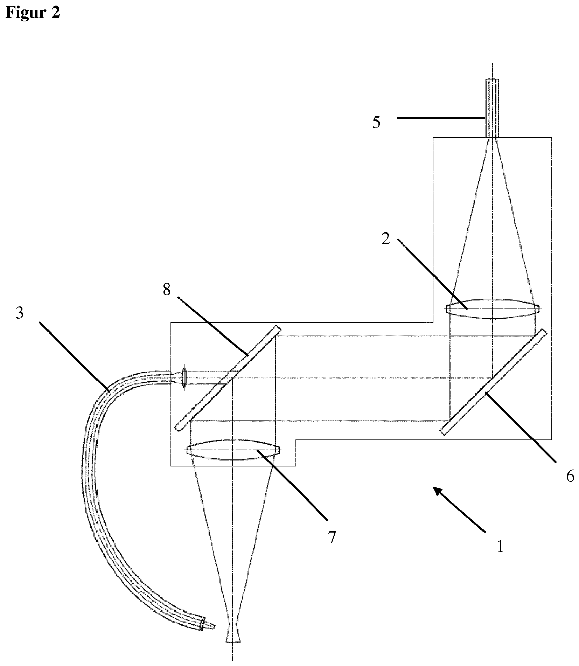

Figur 2 zeigt die partielle Strahlauskopplung in einem Laserschweißkopf 1 am zweiten Umlenker mittels eines Lochspiegels 8. Die Hauptfaser 5 ist mit der Fasereinkopplung an der Laseroptik verbunden. Nach einer Kollimationsoptik 2 wird der Strahl über einen Umlenkspiegel 6 auf den Lochspiegel 8 projiziert, wo ein Teilstrahl des kollimierten Laserstrahls ausgekoppelt wird und in die Nebenfase 3 eingekoppelt wird. Der Hauptstrahl wird über eine Fokussieroptik 7 vor dem Austritt aus dem Laserschweißkopf fokussiert.

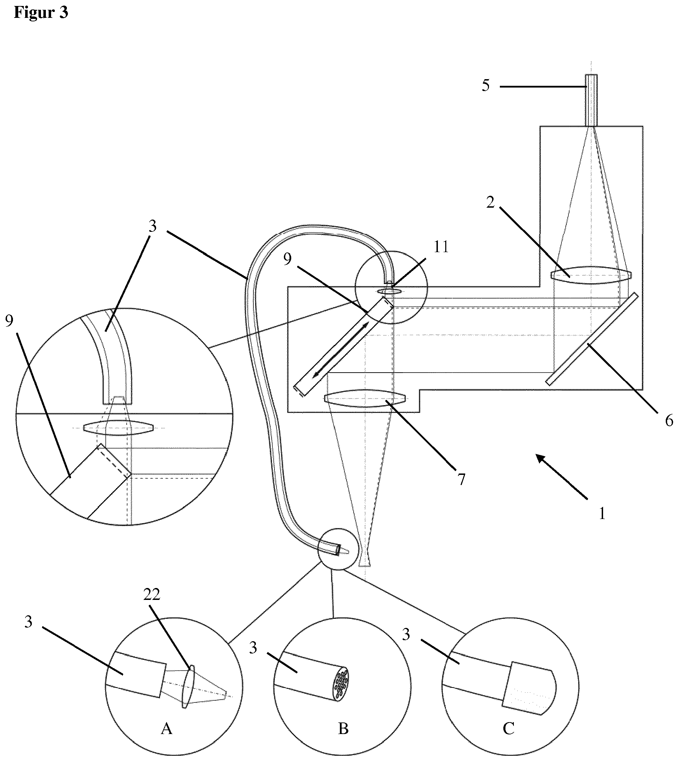

Figur 3 zeigt die partielle Strahlauskopplung über einen planparallel zur Längsachse des Umlenkspiegels 6 verschiebbaren Spiegel 9. Im rechten Teil der Abbildung ist der Bereich der Auskopplung des Strahls vergrößert dargestellt. Die Hauptfaser 5 ist mit der Fasereinkopplung an der Laseroptik verbunden. Nach einer Kollimationsoptik 2 wird der Strahl über einen Umlenkspiegel 6 auf den verschiebbaren Spiegel 9 projiziert. Der Doppelpfeil gibt die Richtungen an, in welche der verschiebbare Umlenkspiegel 6 bewegt werden kann. Der ausgekoppelte Strahl wird bei der in Figur 3 dargestellten Ausführungsform mittels einer Fokussieroptik 11 der Auskopplung in die Nebenfaser 3 eingekoppelt.

In Figur 3 sind unten in den Auschnittsvergrößerungen A, B, C mögliche Ausführungsformen der Spitze der Nebenfaser gezeigt. In A ist ein Ende der Nebenfaser 3 gezeigt vor der eine Mikrolinse 22 angeordnet ist. In B ist das Ende der Mikrofaser 3 axial strukturiert und in C eine optisches Element 24 aufgespleißt.

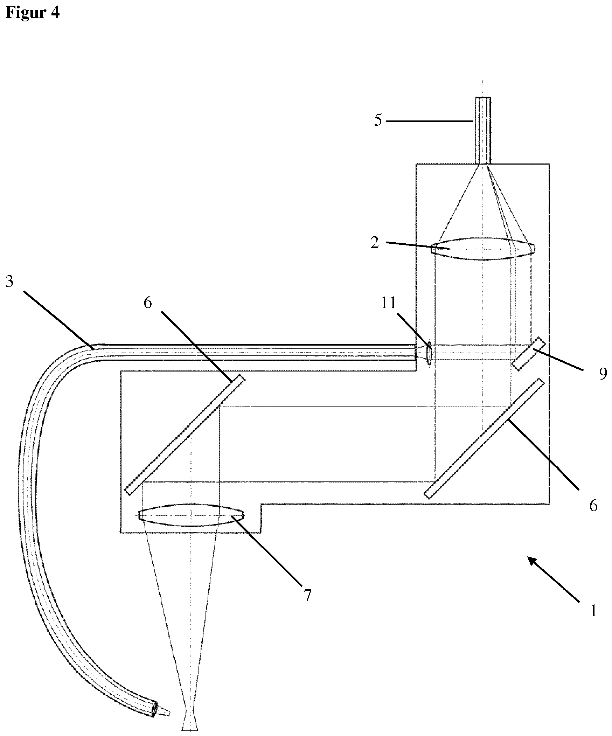

Figur 4 zeigt schematisch eine die partielle, skalierbare Strahlauskopplung aus dem kollimierten Strahl mittels verschiebbarem Auskoppelspiegel 9, welcher auch als Lochspiegel ausgeführt sein kann. Im Übrigen sind auch Hauptfaser 5 und Kollimationsoptik 2 gezeigt. Der Auskoppelspiegel 9 ist bei dieser Ausführungsform hinter der Linse der Kollimationsoptik 2 angeordnet. Der Hauptstrahl wird dann über Umlenkspiegel 6 zur Fokussieroptik 7 geleitet. Der ausgekoppelte Strahl wird mittels Fokussieroptik 1 in die Nebenfaser eingekoppelt.

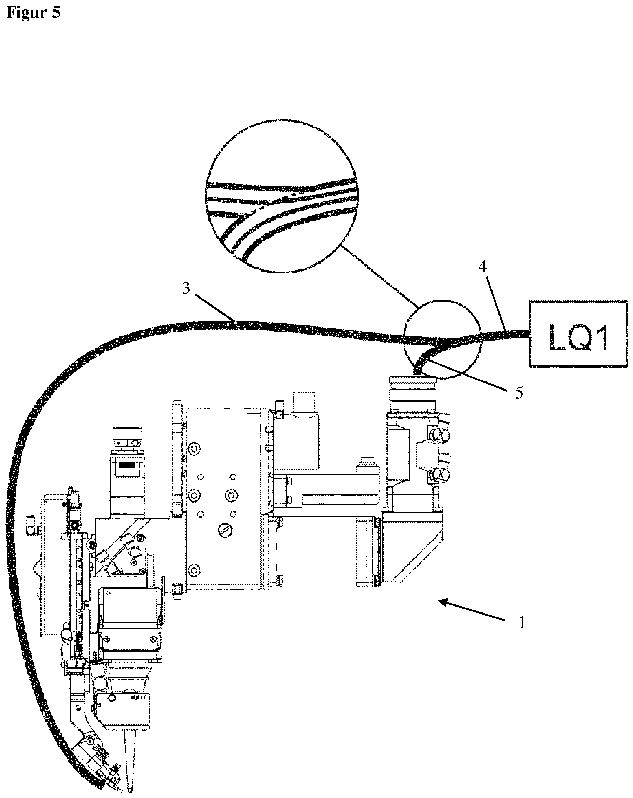

Figur 5 zeigt eine Mehrkernfaser 4, welche hinter einer ersten Laserquelle LQ1 angeordnet ist. Nebenfaser 3 und Hauptfaser 5 trennen sich derart, dass die Nebenfaser 3 aus der Hauptfaser 5 vor deren Einkopplung in den Laserbearbeitungskopf 1 herausgeführt wird. In der Auschnittsvergrößerung ist die Trennung der Fasern der Mehrkernfaser zu erkennen.

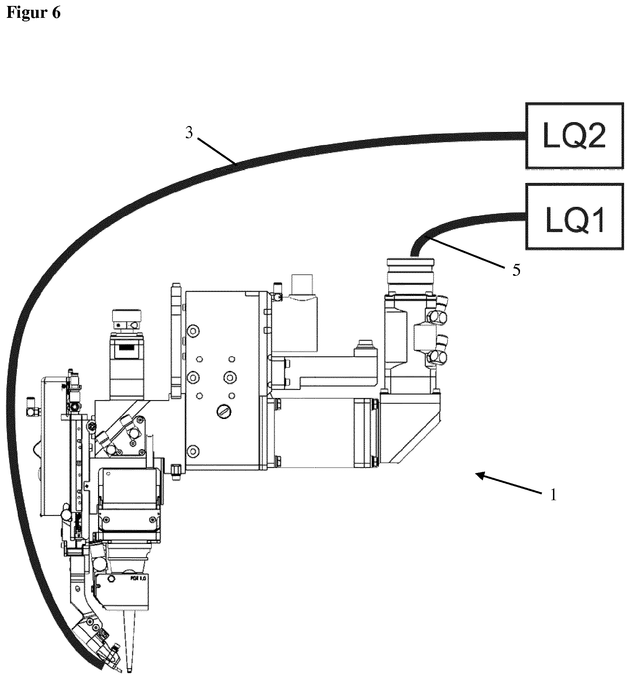

Figur 6 zeigt einen Laserbearbeitungskopf 1 mit einer ersten Laserquelle LQ1 für die Hauptfaser 5 und einer zweiten Laserquelle LQ2 für die Nebenfaser 3.

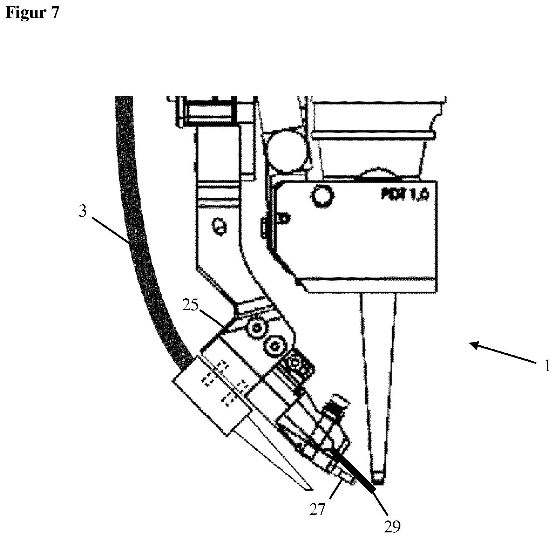

Figur 7 zeigt einen Laserbearbeitungskopf 1 mit einer mechanischen Befestigung der Nebenfaser 3 an einer Drahtführung oder einem Drahtführungsmodul 25 angeordnet. Die Nahtführung erfolgt über einen mechanischen Führungsfinger 27 oder den Zusatzdraht 29.

### BEZUGSZEICHEN

- 1: Laserschweißkopf
- 2: Kollimationsoptik
- 3: Nebenfaser
- 4: Mehrkernfaser
- 5: Hauptfaser
- 6: Umlenkspiegel
- 7: Fokussieroptik
- 8: Lochspiegel
- 9: verschiebbarer Spiegel
- 10: Laseroptik
- 11: Fokussieroptik Auskopplung
- 15: Nebenfaser
- 20: Drahtzuführung
- 22: Mikrolinse
- 24: optisches Element
- 25: Drahtführungsmodul
- 27: Führungsfinger
- 29: Zusatzdraht
- LQ1: erste Laserquelle
- LQ2: zweite Laserquelle

## Patentansprüche

1. Eine Vorrichtung zum Fügen von Werkstücken mittels eines Laserstrahls, umfassend eine Laseroptik (10) sowie eine Hauptfaser (5) und eine Nebenfaser (3), wobei die Hauptfaser (5) mit einer ersten Laserstrahlquelle (LQ1) und einer Fasereinkopplung der Laseroptik (10) verbunden ist
**dadurch gekennzeichnet, dass** die Nebenfaser (3) zwischen einer zweiten Laserstrahlquelle (LQ2) und einer Aufnahme an einer Drahtführung (20) des Lötwerkstoffs der Vorrichtung angeordnet ist, und dass die zweite Laserstrahlquelle (LQ2) eine partielle Strahlauskopplung aus dem kollimierten Laserstrahl ist.

2. Die Vorrichtung nach Anspruch 1, wobei das Ende der Nebenfaser (3) an der Aufnahme zur Formung einer Strahllinie axial strukturiert ist, vor einer Mikrolinse (22) angeordnet ist oder ein optisches Element (24) aufgespleißt ist.

3. Die Vorrichtung nach Anspruch 2, wobei der Abstand zwischen dem Ende der Nebenfaser (3) und der Mikrolinse (22) zur Veränderung der Breite der Strahllinie variabel ist.

4. Die Vorrichtung nach einem der Ansprüche 1 bis 3, wobei ein Druckluft- oder Schutzgasstrom derart am Ende der Nebenfaser (3) angeordnet ist, dass dieses vor Verschmutzungen geschützt ist.

5. Die Vorrichtung nach einem der Ansprüche 1 bis 4, umfassend eine separate Nebenfaser (3) oder eine Zweikernfaser mit Hauptfaser (5) und Nebenfaser (3), wobei die Nebenfaser (3) zumindest am Ende des Lichtaustritts aus der Zweikernfaser getrennt ist.

6. Die Vorrichtung nach Anspruch 5, wobei eine Zweikernfaser auf der Laserseite einen Doppelfaserstecker oder ein Hybridstecker aufweist.

7. Die Vorrichtung nach Anspruch 1, wobei zur Auskopplung zwischen einem ersten und zweiten Strahlumlenker der Laseroptik (10) ein Lochspiegel (8) oder ein verschiebbarer Umlenkspiegel (6) angeordnet ist.

8. Ein Verfahren zum Fügen von Werkstücken mittels eines Laserstrahls, umfassend die Schritte:
a. Formen einer dem Lötprozess einer ersten Laserstrahlquelle (LQ1) vorlaufenden Strahllinie oder optischen Struktur aus einer separaten Nebenfaser (3), welche aus einem Laserstrahl einer zweiten Laserstrahlquelle (LQ2) geformt wird;
b. Verdampfen einer Beschichtung der Werkstücke mittels der Strahllinie oder optischen Struktur der separaten Nebenfaser (3); und
c. Fügen der Werkstücke mittels der Zuführung von Lot und einem Laserstrahl einer Laseroptik(10) aus der ersten Laserstrahlquelle (LQ1), **dadurch gekennzeichnet, dass**
d. als zweite Laserstrahlquelle (LQ2) partiell ein Laserstrahl aus dem kollimierten Laserstrahl der Laseroptik (10) ausgekoppelt wird; und
e. wobei der ausgekoppelte Laserstrahl mittels einer kurzbrennweitigen Fokussierung in eine Nebenfaser (3) eingekoppelt wird.

9. Das Verfahren nach Anspruch 8, wobei zur Auskopplung ein Lochspiegel (8) oder ein verschiebbarer Umlenkspiegel (6) verwendet wird.

10. Das Verfahren nach einem der Ansprüche 8 bis 9, wobei der ausgekoppelte Laserstrahl mittels einer Nebenfaser (3) einer Zweikernfaser übertragen wird, wobei die Nebenfaser(3) am Ende des Lichtaustritts aus der Mehrkernfaser (4) getrennt ist.

11. Das Verfahren nach einem der Ansprüche 8 bis 10, wobei die vorlaufende Strahllinie oder optische Struktur mittels einer axialen Strukturierung der Nebenfaser (3), einer Mikrolinse (22) oder eines optischen Elements, (24) welches auf das Ende der Nebenfaser (3) aufgespleißt ist, geformt wird.

12. Das Verfahren nach einem der Ansprüche 8 bis 11, wobei eine Aufnahme für die Nebenfaser (3) an der Drahtzuführeinrichtung (20) des Lots angebracht wird.

13. Das Verfahren nach Anspruch 12, wobei die Aufnahme radial geklemmt wird.

14. Das Verfahren nach einem der Ansprüche 8 bis 13, wobei die Breite der Strahllinie oder optischen Struktur angepasst wird.

15. Das Verfahren nach einem der Ansprüche 13 oder 14, wobei die Aufnahme durch die Drahtzuführungseinrichtung (20) des Lots gegenüber dem Fügeprozess abgeschirmt wird.

16. Das Verfahren nach einem der Ansprüche 8 bis 15, wobei zum Schutz der Nebenfaser (3) vor Verschmutzungen aus dem Fügeprozess ein Druckluft- oder Schutzgasstrom verwendet wird.

17. Die Verwendung einer Vorrichtung zum Fügen von Werkstücken mittels eines Laserstrahls nach einem der Ansprüche 1 bis 7 zur Erzeugung einer dem Fügeprozess vorgelagerten Strahllinie zum Verdampfen einer Beschichtung der zu fügenden Werkstücke.

## Claims

1. A device for joining workpieces by means of a laser beam, comprising a laser optics (10) as well as a main fibre (5) and a secondary fibre (3), wherein the main fibre (5) is connected to a first laser beam source (LQ1) and a fibre coupling of the laser optics (10), **characterized in in that** the secondary fibre (3) is arranged between a second laser beam source (LQ2) and a receptacle on a wire guide (20) of the soldering material of the device, and **in that** the second laser beam source (LQ2) is a partial beam decoupling from the collimated laser beam.

2. The device according to claim 1, wherein the end of the secondary fibre (3) is axially structured at the receptacle for forming a beam line, is arranged in front of a microlens (22) or an optical element (24) is spliced on.

3. The device according to claim 2, wherein the distance between the end of the secondary fibre (3) and the microlens (22) is variable for varying the width of the beam line.

4. The device according to any one of claims 1 to 3, wherein a compressed air or protective gas flow is arranged at the end of the secondary fibre (3) in such a way that it is protected from contamination.

5. The device according to any one of claims 1 to 4, comprising a separate secondary fibre (3) or a bicore fibre comprising main fibre (5) and secondary fibre (3), wherein the secondary fibre (3) is separated from the bicore fibre at least at the end of the light exit.

6. The device of claim 5, wherein a dual core fibre on the laser side comprises a dual fibre connector or a hybrid connector.

7. The device according to claim 1, wherein a pinhole mirror (8) or a displaceable deflection mirror (6) is arranged between a first and second beam deflector of the laser optics (10) for decoupling.

8. A method of joining workpieces by means of a laser beam, comprising the steps:
a. Forming a beam line or optical structure preceding the soldering process of a first laser beam source (LQ1) from a separate secondary fibre (3) formed from a laser beam of a second laser beam source (LQ2);
b. Vaporising a coating of the workpieces by means of the beam line or optical structure of the separate secondary fibre (3); and
c. Joining of the workpieces by means of the supply of solder and a laser beam of a laser optic (10) from the first laser beam source (LQ1),
**characterised in that**
d. as a second laser beam source (LQ2), a laser beam is partially coupled out of the collimated laser beam of the laser optics (10); and
e. wherein the outcoupled laser beam is coupled into a secondary fibre (3) by means of a short focal length focusing.

9. The method according to claim 8, wherein a perforated mirror (8) or a displaceable deflecting mirror (6) is used for decoupling.

10. The method according to any one of claims 8 to 9, wherein the coupled-out laser beam is transmitted by means of a secondary fibre (3) of a dual-core fibre, the secondary fibre (3) being separated at the end of the light exit from the multicore fibre (4).

11. The method according to any one of claims 8 to 10, wherein the advancing beam line or optical structure is formed by means of an axial patterning of the secondary fibre (3), a microlens (22) or an optical element (24) spliced onto the end of the secondary fibre (3).

12. The method according to any one of claims 8 to 11, wherein a receptacle for the secondary fibre (3) is attached to the wire feeding device (20) of the solder.

13. The method of claim 12, wherein the receptacle is radially clamped.

14. The method of any one of claims 8 to 13, wherein the width of the beam line or optical structure is adjusted.

15. The method according to any one of claims 13 or 14, wherein the pick-up is shielded from the joining process by the wire feeding means (20) of the solder.

16. The method according to any one of claims 8 to 15, wherein a compressed air or protective gas stream is used to protect the secondary fibre (3) from contamination from the joining process.

17. The use of a device for joining workpieces by means of a laser beam according to any one of claims 1 to 7 for generating a beam line preceding the joining process for vaporising a coating of the workpieces to be joined.

## Revendications

1. Dispositif pour assembler des pièces au moyen d'un faisceau laser, comprenant une optique laser (10) ainsi qu'une fibre principale (5) et une fibre secondaire (3), dans lequel la fibre principale (5) est connectée à une première source de faisceau laser (LQ1) et à un couplage de fibres de l'optique laser (10), **caractérisé par** en ce que la fibre secondaire (3) est disposée entre une deuxième source de faisceau laser (LQ2) et un réceptacle sur un guide-fil (20) du matériau de brasage du dispositif, et en ce que la deuxième source de faisceau laser (LQ2) est un découplage partiel du faisceau laser collimaté.

2. Dispositif selon la revendication 1, dans lequel l'extrémité de la fibre secondaire (3) est structurée axialement au niveau du réceptacle pour former une ligne de faisceau, est disposée devant une microlentille (22) ou un élément optique (24) est épissé.

3. Dispositif selon la revendication 2, dans lequel la distance entre l'extrémité de la fibre secondaire (3) et la microlentille (22) est variable pour faire varier la largeur de la ligne de faisceau.

4. Dispositif selon l'une quelconque des revendications 1 à 3, dans lequel un flux d'air comprimé ou de gaz protecteur est disposé à l'extrémité de la fibre secondaire (3) de manière à la protéger de toute contamination.

5. Dispositif selon l'une quelconque des revendications 1 à 4, comprenant une fibre secondaire (3) distincte ou une fibre à double coeur comprenant une fibre principale (5) et une fibre secondaire (3), dans lequel la fibre secondaire (3) est séparée de la fibre à double coeur au moins à l'extrémité de la sortie de lumière.

6. Dispositif de la revendication 5, dans lequel une fibre à double coeur du côté laser comprend un connecteur à double fibre ou un connecteur hybride.

7. Dispositif selon la revendication 1, dans lequel un miroir à trou d'épingle (8) ou un miroir de déviation déplaçable (6) est disposé entre un premier et un deuxième déflecteur de faisceau de l'optique laser (10) pour le découplage.

8. Procédé d'assemblage de pièces au moyen d'un faisceau laser, comprenant les étapes suivantes :
a. Formation d'une ligne de faisceau ou d'une structure optique précédant le processus de soudage d'une première source de faisceau laser (LQ1) à partir d'une fibre secondaire séparée (3) formée à partir d'un faisceau laser d'une seconde source de faisceau laser (LQ2) ;
b. vaporiser un revêtement des pièces au moyen de la ligne de faisceau ou de la structure optique de la fibre secondaire séparée (3) ; et
c. Assemblage des pièces au moyen de l'alimentation en soudure et d'un faisceau laser d'une optique laser (10) provenant de la première source de faisceau laser (LQ1),
**caractérisé en ce que**
d. en tant que deuxième source de faisceau laser (LQ2), un faisceau laser est partiellement couplé hors du faisceau laser collimaté de l'optique laser (10) ; et
e. dans lequel le faisceau laser découplé est couplé dans une fibre secondaire (3) au moyen d'une focalisation à courte distance focale.

9. Procédé selon la revendication 8, dans lequel un miroir perforé (8) ou un miroir de déviation déplaçable (6) est utilisé pour le découplage.

10. Procédé selon l'une quelconque des revendications 8 à 9, dans lequel le faisceau laser découplé est transmis au moyen d'une fibre secondaire (3) d'une fibre à double coeur, la fibre secondaire (3) étant séparée à l'extrémité de la sortie de lumière de la fibre multicœur (4).

11. Procédé selon l'une quelconque des revendications 8 à 10, dans lequel la ligne de faisceau ou la structure optique d'avancement est formée au moyen d'un modelage axial de la fibre secondaire (3), d'une microlentille (22) ou d'un élément optique (24) épissé sur l'extrémité de la fibre secondaire (3).

12. Procédé selon l'une quelconque des revendications 8 à 11, dans lequel un réceptacle pour la fibre secondaire (3) est fixé au dispositif d'alimentation en fil (20) de la soudure.

13. Procédé de la revendication 12, dans lequel le réceptacle est serré radialement.

14. Procédé de l'une quelconque des revendications 8 à 13, dans lequel la largeur de la ligne de faisceau ou de la structure optique est ajustée.

15. Procédé selon l'une quelconque des revendications 13 ou 14, dans lequel le capteur est protégé du processus d'assemblage par le moyen d'alimentation en fil (20) de la soudure.

16. Procédé selon l'une quelconque des revendications 8 à 15, dans lequel un courant d'air comprimé ou de gaz protecteur est utilisé pour protéger la fibre secondaire (3) de la contamination provenant du processus d'assemblage.

17. Utilisation d'un dispositif d'assemblage de pièces au moyen d'un faisceau laser selon l'une quelconque des revendications 1 à 7 pour générer une ligne de faisceau précédant le processus d'assemblage pour vaporiser un revêtement des pièces à assembler.
